# EUROPÄISCHE PATENTSCHRIFT

(11) **EP 2 448 369 B1**
(45) Veröffentlichungstag und Bekanntmachung des Hinweises auf die Patenterteilung: **02.12.2015**
(21) Anmeldenummer: 11186574.7
(22) Anmeldetag: 25.10.2011
(51) Int. Cl.: H05B 3/42, B29C 45/27

(54) **Elektrische Anschlusseinrichtung für ein elektrisches Heizelement einer Heißkanaldüse**
Electrical connection device for an electric heating element of a hot runner nozzle
Dispositif de raccordement électrique pour l'élément de chauffage électrique d'une buse à canal chaud

(30) Priorität: 27.10.2010 DE 102010049467
(43) Veröffentlichungstag der Anmeldung: 02.05.2012
(73) Patentinhaber: Günther Heisskanaltechnik GmbH, 35066 Frankenberg (DE)
(72) Erfinder: Günther, Herbert, 35108 Allendorf (DE); Sommer, Siegrid, 35099 Burgwald (DE); Zimmermann, Frédéric, 90482 Nürnberg (DE)
(74) Vertreter: Patentanwälte Olbricht Buchhold Keulertz

(56) Entgegenhaltungen:
- EP-A1- 0 695 617
- WO-A1-2007/059626
- DE-A1- 3 633 407
- DE-A1- 4 330 462
- US-A- 5 235 737

## Beschreibung

Die Erfindung betrifft eine elektrische Anschlusseinrichtung für ein elektrisches Heizelement einer Heißkanaldüse gemäß dem Oberbegriff von Anspruch 1 sowie eine Heißkanaldüse nach Anspruch 15.

Heißkanaldüsen werden in Spritzgießwerkzeugen eingesetzt, um eine fließfähige Masse - beispielsweise eine Kunststoffschmelze - bei einer vorgebbaren Temperatur unter hohem Druck einem trennbaren Formeinsatz zuzuführen. Sie haben meist ein Materialrohr mit einem Strömungskanal, der in einem Düsenmundstück endet. Letzteres bildet endseitig eine Düsenaustrittsöffnung, die über eine Angussöffnung in den Formeinsatz (Formnest) mündet.

Damit sich die fließfähige Masse innerhalb des Strömungskanals nicht vorzeitig abkühlt, ist außen auf dem Materialrohr ein elektrisches Heizelement vorgesehen. Dieses hat ein hülsenförmiges Trägerelement und einen elektrischen Leiter, der bei Anlegen einer elektrischen Spannung bzw. beim Durchfluss eines elektrischen Stromes Wärme erzeugt.

Der elektrische Leiter kann - wie beispielsweise in DE 10 2006 049 669 A1 offenbart - eine aus Widerstandsdraht gebildete Heizwendel sein. DE 10 2006 049 667 A1 hingegen verwendet als elektrischen Leiter sogenannte Dickschicht-Heizelemente, die im Siebdruckverfahren als Heizleiterbahnen auf dem Trägerelement aufgebracht sind. Zwischen dem Trägerelement und dem elektrischen Leiter ist meist eine Isolierschicht vorgesehen, die ebenfalls im Siebdruckverfahren als Dickschicht aufgebracht wird. Um die Baugröße des Heizelements bzw. der Heißkanaldüse noch weiter zu reduzieren, kann man die Isolierschicht und die Heizleiterbahnen - wie in DE 199 41 038 A1 beschrieben - auch unmittelbar auf der Außenwandung des Materialrohrs aufbringen.

Nachfolgend wird beispielhaft von einer Dickschichtheizung auf einem zylindrischen Trägerelement ausgegangen. Die Erfindung ist darauf jedoch nicht beschränkt, sondern in gleicher Weise auch bei anderen Heizelementen anwendbar.

Um die Dickschichtheizung mit Energie zu versorgen, ist an den Enden der Heizleiterbahn jeweils ein Anschlusskontakt vorgesehen, z.B. in Form einer Anschlusslitze oder eines Anschlussstifts (siehe dazu WO 2005/053361 A1, DE 10 2008 004 526 A1 oder DE 10 2008 015 376 A1). Über den Anschlusskontakt wird die Heizleiterbahn mit der Anschlussleitung einer Stromquelle verbunden, wobei eine solche elektrische Verbindung grundsätzlich folgende Anforderungen erfüllen muss:
▪ sie muss lösbar ausgebildet sein, um die Heißkanaldüse im Spritzgießwerkzeug ein- und ausbauen zu können und/oder um ein Heizelement im Falle eines Defekts austauschen zu können;
▪ sie muss einen stets ausreichenden und zuverlässigen elektrischen Kontakt zwischen den Anschlusskontakten der Heizleiterbahnen und der mit der Stromquelle verbundenen Anschlussleitung herstellen;
▪ sie muss aufgrund der beim Spritzgießen vorherrschenden hohen Temperaturen temperaturbeständig sein und mechanischen Zugbelastungen standhalten, die beim Ein- und Ausbau der Heißkanaldüse und/oder beim Auswechseln des Heizelements auftreten können.

US 4 486 650 B1 offenbart eine lösbare Steckverbindung zwischen den Anschlussenden einer Heizwendel und der Anschlussleitung einer Stromversorgung. Die Enden der Heizwendel sind mit radial nach außen gerichteten Kontaktstiften versehen, die etwa mittig in je einer Muffe angeordnet sind. Die Enden der Anschlussleitung sind mit hülsenförmigen Steckkontakten versehen, die jeweils in einem Steckergehäuse untergebracht sind. Letztere werden in die Muffen eingesteckt, wobei die elektrisch leitende Verbindung zwischen der Außenoberfläche der Kontaktstifte und der Innenoberfläche der Steckkontakte hergestellt wird. Um zu verhindern, dass sich das Steckergehäuse von der Muffe löst, ist eine Spannvorrichtung in Form einer Überwurfmutter vorgesehen, die auf ein Außengewinde der Muffe aufgeschraubt wird. Für jeden Anschluss ist mithin ein separater Steckkontakt notwendig.

WO 2004043672 offenbart ein Heizelement zum Aufsetzen auf eine Rohrleitung oder eine Heißkanaldüse, wobei das Heizelement mit einem stromdurchflossenen Leiter versehen ist, der über Anschlussleitungen an eine Stromquelle anschließbar ist. Die Anschlussleitungen weisen jeweils ein endseitiges Kontaktstück auf, das mit einer Kontaktfläche des Heizelementes in Anlage bringbar ist. Ferner ist eine Spannvorrichtung vorgesehen, mittels der das Kontaktstück gegen das Heizelement gespannt wird, wobei das Kontaktstück lose auf der Kontaktfläche des Heizelements aufliegt und wobei die Spannkraft der Spannvorrichtung im wesentlichen normal zur Kontaktfläche wirkt und dabei das Kontaktstück gegen die Kontaktfläche spannt. Durch Lösen der Spannvorrichtung kommt das Kontaktstück von der Kontaktfläche frei, wodurch das Heizelement abgenommen und ausgetauscht werden kann. Die von der Spannvorrichtung erzeugte Spannkraft, wird entweder von einer Feder oder von einer Spannschraube erzeugt.

Eine solche Lösung hat den Nachteil, dass der elektrische Kontakt zwischen den Kontaktflächen des Heizelements und den Kontaktstücken der Anschlussleitung sowohl von der Beschaffenheit und der Sauberkeit der zu kontaktierenden Flächen als auch von der Spannkraft der Spannvorrichtung abhängig ist. Sind die Kontaktflächen uneben oder verschmutzt oder lässt die Spannkraft der Feder nach, kann es zu Kontaktproblemen kommen. Dies führt meist zu Leistungsverlusten innerhalb des Heizelements. Ferner kommt es im Bereich der Anschlusskontakte zu einer übermäßigen Wärmeentwicklung, was zu Schäden an dem Heizelement führen kann.

Dokument DE 43 30 462 A1 offenbart eine Heißkanaldüse mit einem elektrischen Heizelement. Dessen zwei elektrische Anschlussleitungen sind parallel zueinander durch einen Gewindebolzen des Düsenkörpers radial nach außen geführt. Innerhalb eines die zwei Anschlussleitungen elektrisch trennenden Isolierkörpers sind Kontaktstellen in Form von abisolierten Drahtenden ausgebildet. Jede dieser Kontaktstellen ist mit einem abisolierten Kabelende einer Anschlussleitung kontaktiert und gemeinsam mit dieser von einer Madenschraube im Isolierkörper fixiert. Weiterhin ist der Isolierkörper konzentrisch innerhalb einer Aufnahmehülse angeordnet, die auf den Gewindebolzen des Düsenkopfes aufgeschraubt ist und den Isolierkörper am Düsenkopf filiert.

Ziel der Erfindung ist es, diese und weitere Nachteile des Standes der Technik zu überwinden und eine verbesserte elektrische Anschlusseinrichtung für ein elektrisches Heizelement einer Heißkanaldüse zu schaffen, welche die oben genannten Anforderungen zumindest teilweise erfüllt. Die Anschlusseinrichtung soll ferner mit einfachen Mitteln kostengünstig aufgebaut und einfach zu handhaben sein. Angestrebt wird insbesondere eine ebenso einfache wie rasche Montage.

Hauptmerkmale der Erfindung sind im kennzeichnenden Teil von Anspruch 1 und in Anspruch 15 angegeben. Ausgestaltungen sind Gegenstand der Ansprüche 2 bis 14.

Bei einer Anschlusseinrichtung zum Erzeugen einer elektrischen Verbindung zwischen einem elektrischen Heizelement einer Heißkanaldüse und einer Anschlussleitung, die mit einer Stromquelle verbunden ist, wobei die Anschlussleitung Kontaktelemente aufweist, die mit Anschlusskontakten des Heizelements elektrisch kontaktierbar sind, sieht die Erfindung vor, dass die Anschlusskontakte des Heizelements in einem Isolierkörper enden, der die Anschlusskontakte elektrisch voneinander trennt und dass der Isolierkörper zumindest abschnittsweise in einer Aufnahmehülse angeordnet ist, wobei die Anschlussleitung derart in oder an der Aufnahmehülse festlegbar ist, dass die Kontaktelemente der Anschlussleitung die Anschlusskontakte des Heizelements elektrisch kontaktieren.

Die Aufnahmehülse bildet zusammen mit dem Isolierkörper eine Anschlussstelle, insbesondere eine Art Buchse zur Aufnahme der Anschlussleitung und deren Kontaktelemente, die innerhalb der Aufnahmehülse stets sicher und zuverlässig mit den Anschlusskontakten des Heizelements in Kontakt gebracht werden, so dass für den Betrieb der Heißkanaldüse ein stets ausreichender und dauerhafter elektrischer Kontakt zwischen den Anschlusskontakten der Heizleiterbahnen und der mit der Stromquelle verbundenen Anschlussleitung gewährleistet ist. Letztere kann über die Aufnahmehülse zudem lösbar an dem Heizelement festgelegt werden, so dass die Heißkanaldüse rasch und bequem im Spritzgießwerkzeug ein- und ausgebaut werden kann. Ferner lässt sich das Heizelement im Falle eines Defekts rasch austauschen, was sich äußerst günstig auf die Wartungs- und Montagekosten auswirkt. Darüber hinaus hält die erfindungsgemäße Anschlusseinrichtung problemlos auch höheren Temperaturen stand, und sie bietet eine mechanische Zugentlastung für die Anschlusskontakte des Heizelements, was beim Ein- und Ausbau der Heißkanaldüse und/oder beim Auswechseln des Heizelements wichtig ist.

Um den elektrischen Kontakt zwischen den Anschlusskontakten des Heizelements und den Kontaktelementen der Anschlussleitung weiter zu verbessern, sieht eine Weiterbildung der Erfindung vor, dass die Anschlusskontakte des Heizelements endseitig mit Kontaktstiften versehen sind. Diese führen die meist empfindlichen und mit den Enden der Heizleiterbahnen verlöteten Anschlusskontakte des Heizelements fort und bieten in Verbindung mit dem Isolierköper eine deutlich verbesserte mechanische Stabilität.

Der Isolierkörper hat einen Halsabschnitt und einen Sockelabschnitt, wobei der Halsabschnitt vorzugsweise in der Aufnahmehülse liegt, während sich diese auf dem Sockelabschnitt des Isolierkörpers abstützt. Der Isolierkörper trennt damit nicht nur die Anschlusskontakte der Heizleiterbahnen und die Kontaktstifte elektrisch voneinander. Er trägt auch maßgeblich zur Stabilität der Anschlusseinrichtung bei, die mechanischen und thermischen Belastungen problemlos standhält.

Dazu trägt auch bei, wenn der Sockelabschnitt des Isolierkörpers die Anschlusskontakte des Heizelements überdeckt. Diese werden vor äußeren Umwelteinflüssen zuverlässig geschützt. Gleichzeitig weist der Sockel eine relativ große Stützfläche auf, was sich günstig auf die Stabilität und Zuverlässigkeit sowohl der Anschlusseinrichtung als auch der Heißkanaldüse auswirkt. Eine weitere wichtige Ausbildung der Erfindung sieht vor, dass in dem Isolierkörper ein weiterer Kontaktstift vorgesehen ist, der bevorzugt länger ausgebildet ist als die übrigen Kontaktstifte. Dadurch tritt dieser weitere Kontaktstift beim Fügen der Anschlusskontakte in der Aufnahmebuchse zuerst in Kontakt mit einem entsprechend zugeordneten Kontaktelemente der Anschlussleitung. Dies ist insbesondere dann von Vorteil, wenn der weitere Kontaktstift einen Masseanschluss für das Heizelement bildet. Damit ist beim Anschließen des Heizelements an die Stromversorgung stets eine Masseverbindung hergestellt, bevor die eigentlichen Stromkontakte elektrischen Kontakt erhalten. Kurzschlüsse oder unkontrollierte Entladungen werden dadurch wirksam vermieden.

Der weitere Kontaktstift kann beispielsweise über ein Kabel mit dem Substrat oder dem Trägerelement des Heizelements verbunden sein. Hierzu ist in dem Isolierkörper eine Ausnehmung vorgesehen, durch die hindurch das Massekabel aus dem Isolierkörper heraus nach außen geführt werden kann.

Die Kontaktstifte und der weitere Kontaktstift sind kraft- und/oder formschlüssig in dem Isolierkörper festgelegt, was sich äußerst günstig auf die Stabilität der Anschlusseinrichtung auswirkt. Dabei können die Kontaktstifte entweder über den Halsabschnitt des Isolierkörpers vorstehen oder sie sind zumindest teilweise in dem Isolierkörper versenkt.

Mit Vorteil ist zwischen dem Isolierköper und der Aufnahmehülse eine Verdrehsicherung ausgebildet, so dass beide Bauteile während der Montage und während des Betriebes stets zuverlässig positioniert sind.

Eine gleichfalls wichtige Ausgestaltung der erfindungsgemäßen Anschlusseinrichtung sieht vor, dass die Anschlussleitung endseitig einen Stecker aufweist, der lösbar in der Aufnahmehülse festlegbar ist. Dadurch kann die Anschlussleitung stets rasch und bequem an dem Heizelement festgelegt und ebenso einfach und bequem wieder entfernt werden. Der Montageaufwand für die Heißkanaldüse und das Heizelement ist auf ein Minimum reduziert. Dabei ist es zweckmäßig, wenn der Stecker kraft- und/oder formschlüssig in der Aufnahmehülse festlegbar ist, insbesondere wenn der Stecker mit der Aufnahmehülse verrastbar ist. Hierzu ist die Aufnahmehülse mit einer Rastnut für den Stecker versehen. Dieser weist entsprechende Rastelemente auf, die beim Einführen des Steckers in die Aufnahmehülse mit der Rastnut in Eingriff gelangen.

Damit der bevorzugt drei oder mehrpolige Stecker beim Einführen in die Aufnahmehülse stets korrekt gepolt ist und nicht verdreht werden kann, ist in der Aufnahmehülse eine Führungsnut für den Stecker ausgebildet. Letzterer ist an seinem Außenumfang mit einem mit der Führungsnut in der Aufnahmehülse korrespondierenden Vorsprung versehen. Führungsnut und Vorsprung bildet mithin eine Art Schlüssel, der dafür Sorge trägt, dass die Anschlusskontakte des Heizelements und der Masseanschluss stets korrekt zugeordnet und gepolt sind. Anschlussfehler werden wirksam vermieden.

Gemäß einer weiteren Ausführungsform der Erfindung ist zwischen der Aufnahmehülse und dem Isolierkörper ein Federelement angeordnet. Dieses stützt sich in Axialrichtung der Aufnahmehülse bevorzugt auf dem Sockel des Isolierkörpers ab, so dass dieser in montierter Position mit einer permanenten und definierten Kraft gegen das Heizelement gedrückt wird. Das Federelement kann einstückig mit der Aufnahmehülse ausgebildet sein. Man kann aber auch ein separates Federelement, beispielsweise eine Tellerfeder oder eine Blattfeder einsetzen.

Eine weitere wichtige Ausgestaltung der erfindungsgemäßen Anschlusseinrichtung sieht vor, dass die Aufnahmehülse an ihrem unteren Ende eine Lasche trägt. Diese dient zum einen als Verdrehsicherung der Aufnahmehülse gegenüber einem Gehäuse der Heißkanaldüse. Weil das Gehäuse für die Montage der Düse meist mit einem Schlitz oder einer Aussparung versehen ist, kann die Lasche zudem derart ausgebildet sein, dass dieser Schlitz bzw. die Aussparung von der Lasche geschlossen wird, so dass das Heizelement vollständig von dem Gehäuse und der Lasche eingeschlossen und damit geschützt ist. Die Lasche kann einstückig mit der Aufnahmehülse ausgebildet sein. Man kann diese aber auch separat von der Aufnahmehülse ausbilden.

Eine weitere Funktion der Lasche kann darin bestehen, eine Führung bzw. Durchführung für eine Anschlussleitung eines Temperaturfühlers zu bilden. Hierzu ist die Lasche mit einer Ausnehmung versehen, welche die Anschlussleitung des Temperaturfühlers aufnimmt.

Eine wichtige Ausführungsform sieht ferner vor, dass die Aufnahmehülse konzentrisch in einer Außenhülse angeordnet ist, wobei die Aufnahmehülse axialfest-drehbar in der Außenhülse gelagert ist. Hierzu ist die Außenhülse an ihrem oberen Ende mit einer inneren Umfangsnut versehen, während die Aufnahmehülse an ihrem oberen Ende mit einem radial nach außen gerichteten Flanschrand versehen ist, der in montierte Stellung der Hülsen formschlüssig von innen in die Umfangsnut der Außenhülse eingreift. Für die Montage beider Bauteile ist die Aufnahmehülse in Axialrichtung mit Schlitzen versehen, so dass die dazwischen verbleibenden Wandungssegmente bzw. Abschnitte beim Aufsetzen der Außenhülse auf die Aufnahmehülse nach innen elastisch ausweichen und anschließend wieder radial nach außen federn können. Außenhülse und Aufnahmehülse werden mithin ineinander verrastet, so dass eine axialfest-drehbare Verbindung entsteht.

Die Außenhülse dient dazu, die Aufnahmehülse und den Isolierköper an dem Heizelement, insbesondere an der Heißkanaldüse festzulegen, wobei die Außenhülse mit ihrem unteren Ende an einem Gehäuse der Heißkanaldüse festlegbar ist, insbesondere mittels einer Schraubverbindung. Dazu ist die Außenhülse an ihrem unteren Ende mit einem Gewinde versehen, das in ein korrespondierendes Gewinde im Gehäuse oder aufgeschraubt wird.

Eine Heißkanaldüse für ein Spritzgießwerkzeug ist zweckmäßig mit einer erfindungsgemäßen Anschlusseinrichtung versehen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Seitenansicht einer Heißkanaldüse mit einer Anschlusseinrichtung für ein Heizelement, teilweise im Schnitt;
- Fig. 2: die Anschlusseinrichtung von Fig. 1 in einer vergrößerten Darstellung;
- Fig. 3: eine Draufsicht auf die Anschlusseinrichtung von Fig. 1;
- Fig. 4: eine Seitenansicht eines Isolierkörpers mit einem eingesetzten Kontaktstift;
- Fig. 5: eine Schnittansicht des Isolierkörpers von Fig. 4 ohne Kontaktstifte;
- Fig. 6: eine Draufsicht auf den Isolierkörper von Fig. 5;
- Fig. 7: eine Druntersicht des Isolierkörpers von Fig. 5;
- Fig. 8: eine Rückansicht des Isolierkörpers von Fig. 5;
- Fig. 9: eine Seitenansicht einer Verdrehsicherung;
- Fig. 10: eine Schnittansicht der Verdrehsicherung von Fig. 9;
- Fig. 11: eine Draufsicht auf die Verdrehsicherung von Fig. 9;
- Fig. 12: eine Druntersicht der Verdrehsicherung von Fig. 9;
- Fig. 13: eine Seitenansicht einer Sicherungshülse;
- Fig. 14: eine Schnittansicht der Sicherungshülse von Fig. 13;
- Fig. 15: eine andere Ausführungsform einer Verdrehsicherung.

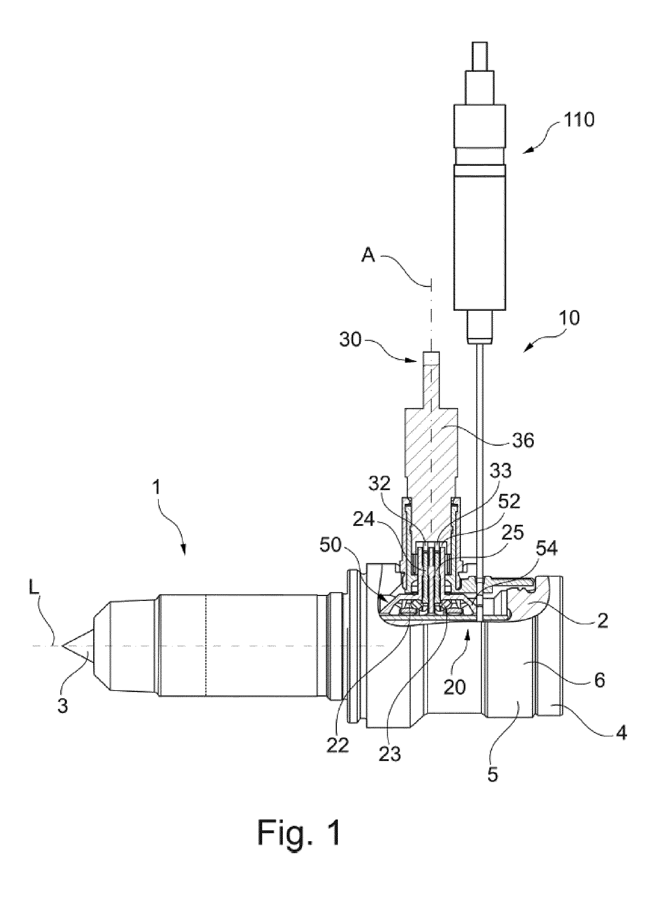

Die in Fig. 1 allgemein mit 1 bezeichnete Heißkanaldüse wird in einem (nicht dargestellten) Spritzgießwerkzeug eingesetzt, um eine fließfähige Kunststoffschmelze einem trennbaren Formeinsatz zuzuführen. Sie hat ein Materialrohr 2 mit einem (nicht gezeigten) Schmelzekanal, der in einem Düsenmundstück 3, beispielsweise einer Düsenspitze, endet. Letztere bildet endseitig eine (nicht näher bezeichnete) Düsenaustrittsöffnung, die über eine (gleichfalls nicht sichtbare) Angussöffnung in den Formeinsatz des Spritzgießwerkzeugs mündet. An seinem gegenüber liegendem Ende trägt das Materialrohr 2 einen Flansch 4, der dichtend an einem (nicht dargestellten) Verteiler des Spritzgießwerkzeugs anliegt.

Auf dem Außenumfang des Materialrohres 2 ist ein (nur schematisch dargestelltes) elektrisches Heizelement 20 aufgesetzt. Dieses hat ein rohrförmig oder hülsenförmig ausgebildetes Trägerelement und eine darauf aufgebrachte Dickschichtheizung. Letztere wird im Wesentlichen von einer unmittelbar auf dem Trägerelement aufgebrachten keramischen Isolationsschicht und einer darüber aufgebrachten Heizschicht gebildet, wobei die Heizschicht eine mäanderförmige Heizleiterbahn aufweist, die an ihren Enden mit Anschlussflächen 21 versehen ist. Eine äußere Abdeckschicht schützt und isoliert die Heizleiterbahnen. Die beliebig gestaltbaren Heizleiterbahnen können je nach erforderlicher Leistung in unterschiedlicher Dichte und Anordnung auf der Isolationsschicht aufgebracht sein. Dadurch lässt sich bei Bedarf eine definierte Temperaturverteilung innerhalb des Materialrohrs 2 erzielen. Der Aufbau eines solchen Heizelements ist in DE 10 2006 049 667 A1 beschrieben, auf deren Inhalt hiermit Bezug genommen wird. Ein alternatives Heizelement ist in DE 10 2006 049 669 A1 offenbart, auf deren Inhalt ebenfalls Bezug genommen wird.

Auf den Anschlussflächen 21 der Heizleiterbahn sind Anschlusskontakte 22, 23 aufgebracht, beispielsweise in Form von Anschlussdrähten oder -leitungen, die mittels elektrisch leitender Haftschichten an den Heizleiterbahnen befestigt sind. Der Aufbau einer solchen elektrischen Verbindung mit mehreren elektrisch leitenden Haftschichten ist in DE 10 2008 015 376 A1 beschrieben, auf deren Inhalt hiermit Bezug genommen wird. Die Anschlusskontakte 22, 23 können aber auch durch andere Methoden an den Anschlussflächen 21 befestigt werden, beispielweise durch Schweißen oder mittels mechanischer Mittel.

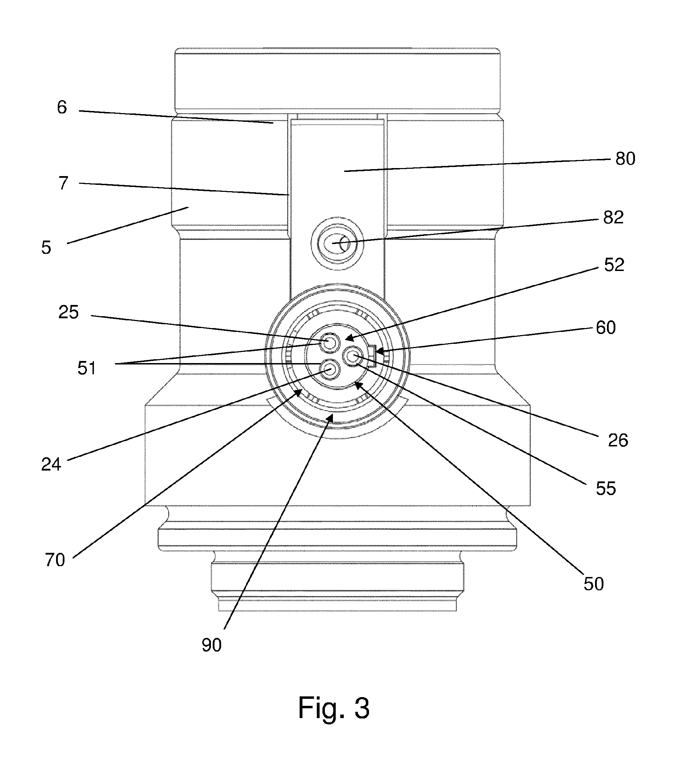

Das Materialrohr 2 sitzt gemeinsam mit dem Heizelement 20 in einem Gehäuse 5, das in eine geeignete Aussparung im Werkzeug eingesetzt wird und die Düse 1 gegenüber der Angussöffnung zentriert. In dem Gehäuse 5 ist - wie in Fig. 3 zu sehen - eine seitliche Aussparung 7 eingebracht, die in Längsrichtung L der Düse 1 zum Verteiler bzw. zum Flansch 4 des Materialrohres 2 hin offen ist. Die Aussparung 7 dient zur Aufnahme und Durchführung einer Anschlusseinrichtung 10, die auf dem Heizelement 20, insbesondere über den Anschlussflächen 21 des Heizelements 20 angeordnet ist und radial nach außen vorsteht. Man erkennt in Fig. 3, dass der Flansch 4 des Materialrohres 2 in montiertem Zustand der Düse 1 auf dem Ende 6 des Gehäuses 5 aufliegt und dabei die Aussparung 7 zum Verteiler hin schließt.

Die Anschlusseinrichtung 10 dient zum Erzeugen einer elektrischen Verbindung zwischen dem elektrischen Heizelement 20 und einer Anschlussleitung 30, wobei die Anschlusskontakte 22, 23 des Heizelements 20 mit Kontaktelementen 32, 33 der Anschlussleitung 30 in Verbindung gebracht werden. Letztere ist mit einer (nicht dargestellten) Stromquelle verbunden, welche das Heizelement 20 während des Betriebes der Heißkanaldüse 1 mit Strom versorgt.

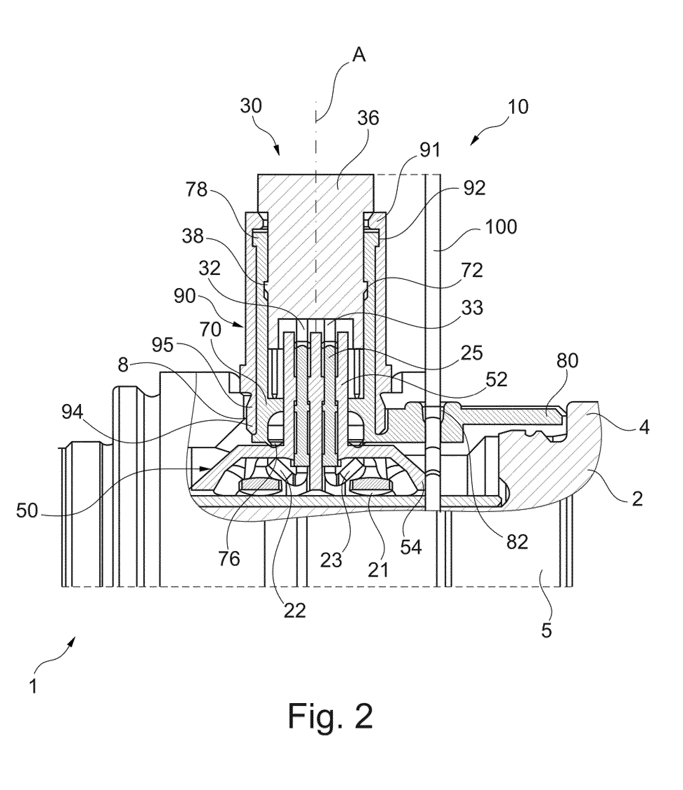

Die Anschlusseinrichtung 10 hat einen im Wesentlichen glocken- oder hutförmigen Isolierkörper 50, der bevorzugt aus einem keramischen Werkstoff oder aus einem anderen isolierenden Material gefertigt ist. Er hat einen Halsabschnitt 52 sowie einen Sockelabschnitt 54 und nimmt die Anschlusskontakte 22, 23 des Heizelements 20 auf, wobei er diese elektrisch voneinander trennt. In montierter Position sitzt der Isolierkörper 50 - wie Fig. 1 und 2 zeigen - mit seinem Halsabschnitt 52 in einer Aufnahmehülse 70, die von einer Außenhülse 90 umschlossen ist. Letztere wird mit dem Gehäuse 5 verbunden, um die Anschlusseinrichtung 10, insbesondere den Isolierkörper 50 und die Aufnahmehülse 70, an dem Heizelement 20 bzw. an der Heißkanaldüse 1 zu fixieren.

Wie die vergrößerte Darstellung von Fig. 2 näher zeigt, sind die Anschlusskontakte 22, 23 des Heizelements 20 endseitig mit Kontaktstiften 24, 25 versehen. Diese sind bevorzugt aus Silber oder einem anderen Edelmetall gefertigt und durch Verlöten oder Quetschen (Crimpen) mit den Anschlusskontakten 22, 23 des Heizelements 20 fest verbunden.

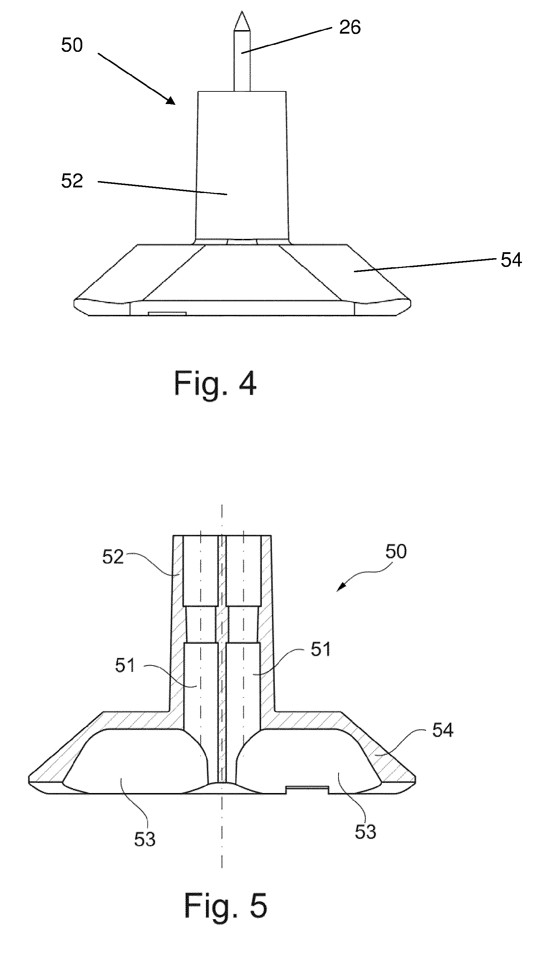

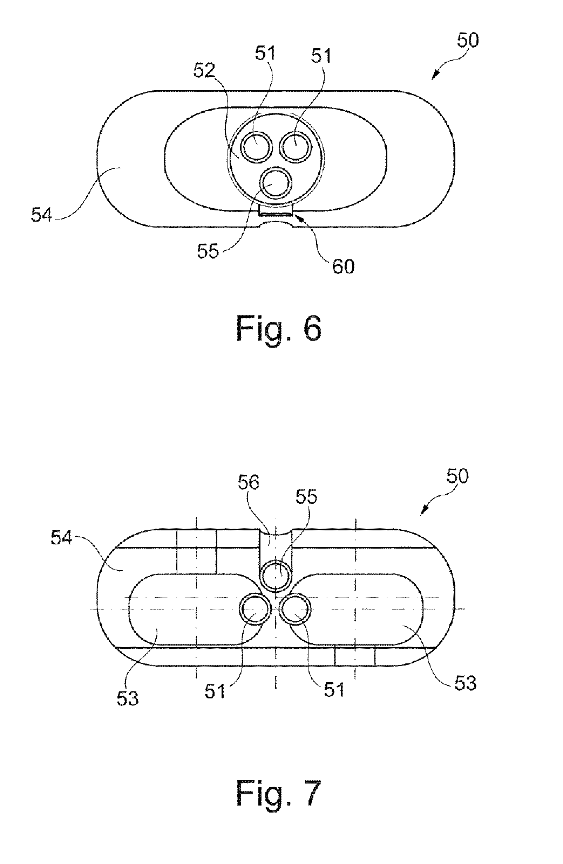

Jeder Kontaktstift 24, 25 ist kraft- und/oder formschlüssig von unten in den Isolierkörper 50 eingesetzt, der hierzu mit zwei parallel liegenden Aufnahmekanälen 51 versehen ist. Beide Kanäle 51 enden jeweils in einem separaten Hohlraum 53, die im Bereich des Sockelabschnitts 54 ausgebildet sind (siehe Fig. 5 und 7).

Man erkennt in Fig. 2, dass die Hohlräume 53 derart bemessen sind, dass diese die Anschlusskontakte 22, 23 aufnehmen können und dass der Sockelabschnitt sowohl die Anschlusskontakte 22, 23 als auch die Anschlussflächen 21 der Heizleiterbahnen überdeckt. Auf diese Weise sind die relativ empfindlichen Bereiche der elektrischen Anschlüsse nach außen hin geschützt.

Die Kontaktstifte 24, 25 können derart ausgebildet und in den Isolierkörper 50 eingesetzt sein, dass sie - wie in Fig. 2 dargestellt - mit ihren freien Enden nicht über die Stirnfläche des Halsabschnitts 52 des Isolierkörpers 50 hinausragen. In einer alternativen Ausführungsform können Sie jedoch durchaus über die Stirnfläche des Halsabschnitts 52 hervorstehen, wie dies in Fig. 3 gezeigt ist. In diesem Fall sind die Kontaktstifte 24, 25 mit (nicht näher bezeichneten) Spitzen versehen.

Wie Fig. 3 und 4 zeigen, ist in dem Isolierkörper 50 ein weiterer Kontaktstift 26 für einen Masseanschluss vorgesehen. Hierfür ist innerhalb des Isolierkörpers 50 ein weiterer Aufnahmekanal 55 ausgebildet (siehe dazu auch Fig. 6 und 7), der den weiteren Kontaktstift 26 kraft- und/oder formschlüssig aufnimmt. Der weitere Aufnahmekanal 55 endet in einer seitlichen Ausnehmung 56. Diese dient zur Durchführung eines (nicht dargestellten) Anschlussdrahtes oder einer Leitung, um den weitern Kontaktstift 26 mit dem Trägerelement des Heizelements 20 zu verbinden.

Der weitere Kontaktstift 26 ist ebenfalls aus Silber oder einem anderen Edelmetall gefertigt und durch Verlöten oder Quetschen (Crimpen) mit dem Anschlussdraht für den Masseanschluss am Heizelement 20 verbunden. Er kann -wie in Fig. 4 angedeutetbereits in dem Isolierkörper 50 vormontiert sein, um die Montage der Anschlusseinrichtung 10 zu vereinfachen.

Damit beim Anschließen des elektrischen Heizelements 20 an die Anschlussleitung 30 bzw. an die Stromversorgung stets zuerst der Masseanschluss bzw. Massekontakt hergestellt wird, ist der weitere Kontaktstift 26 länger ausgebildet als die Kontaktstifte 24, 25.

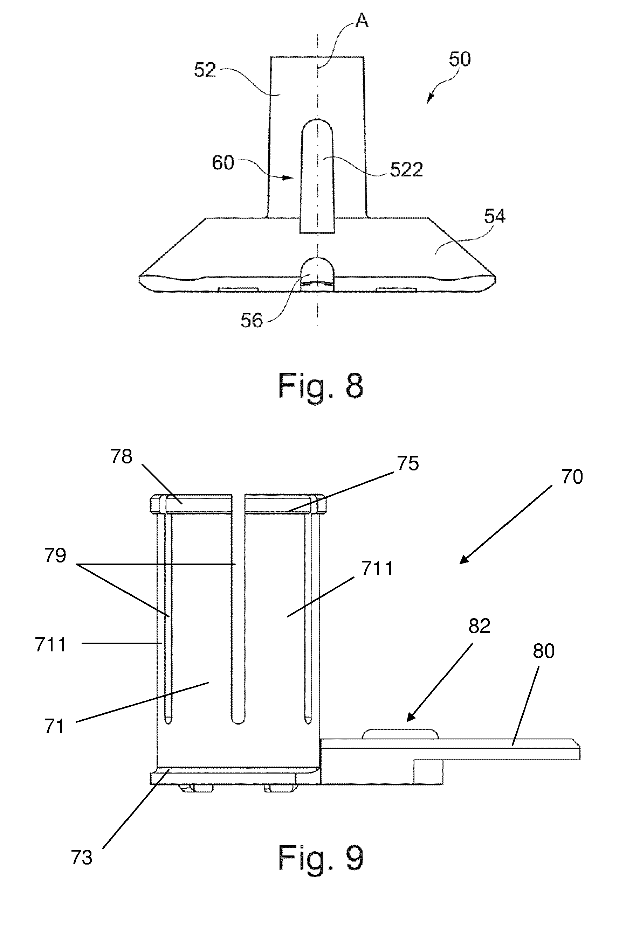

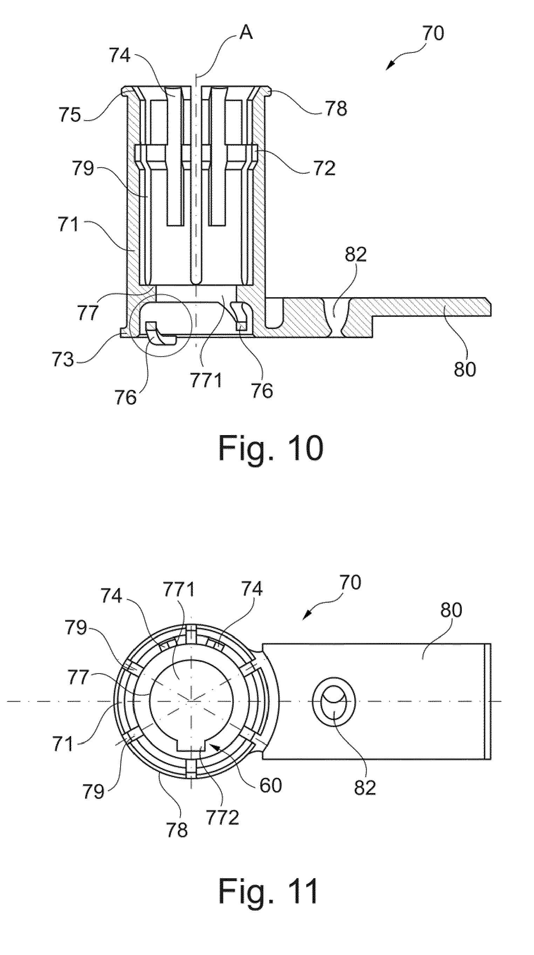

Die in den Fig. 9 bis 12 gezeigt Aufnahmehülse 70 hat einen Zylindermantel 71, der sich mit seinem unteren Rand 73 auf dem Sockelabschnitt 54 des Isolierkörpers 50 abstützt. Er weist über den Umfang verteilt mehrere in Axialrichtung A verlaufende Schlitze 79 auf, die den Zylindermantel 71 in federelastische Abschnitte 711 unterteilten. An seinem oberen Rand 75 ist an der Aufnahmehülse 70 ein Flanschrand 78 ausgebildet, der gegenüber dem Zylindermantel 71 radial nach außen vorsteht.

Innerhalb der Aufnahmehülse 70 bildet der Zylindermantel 71 im unteren Bereich einen inneren Flanschrand 77. Dieser begrenzt eine Durchgangsöffnung 771 für den Halsabschnitt 52 des Isolierkörpers 50, wobei der Innendurchmesser der Durchgangsöffnung 771 geringfügig größer ist als der Außendurchmesser des Halsabschnitts 52.

Am Innenumfang der Durchgangsöffnung 771 ist eine Aussparung 772 für einen Vorsprung 522 ausgebildet, der in Längsrichtung A seitlich am Halsabschnitt 52 des Isolierkörpers 50 ausgebildet ist. Der Vorsprung 522 sitzt, wenn der Isolierkörper 50 und die Aufnahmehülse 70 montiert sind, im Wesentlichen formschlüssig in der Aussparung 772, so dass beide zusammen eine Verdrehsicherung 60 bilden. Über dem inneren Flanschrand 77 sind in dem Zylindermantel 71 in Axialrichtung A noch zwei Führungsnuten 74 vorgesehen, die parallel zueinander verlaufen. Etwa auf halber Höhe der Führungsnuten 74 ist in dem Zylindermantel 71 ferner eine umlaufende Rastnut 72 eingebracht, die zum oberen Rand 75 der Aufnahmehülse 70 hin eine (nicht näher bezeichnete) Rastkante bildet.

Unterhalb des inneren Flanschrandes 77 ist zwischen der Aufnahmehülse 70 und dem Isolierkörper 50 ein Federelement 76 angeordnet, das bevorzugt einstückig mit der Aufnahmehülse 70 ausgebildet ist. Das Federelement 76 übt nach erfolgter Montage der Anschlusseinrichtung 10 einen leichten Druck auf den Isolierkörper 50 auf, so dass dieser stets zuverlässig auf dem Heizelement 20 aufsitzt, ohne dieses jedoch zu beschädigen.

Am unteren Ende der Aufnahmehülse 70 ist seitlich eine Lasche 80 ausgebildet. Diese ist derart bemessen und ausgebildet, dass nach der Montage von Isolierkörper 50 und Aufnahmehülse 70 die in dem Gehäuse 5 ausgebildete Aussparung 7 von der Lasche 80 verschlossen wird. Dabei schließen die Lasche 80 und das Gehäuse 5 im Wesentlichen bündig miteinander ab.

In der Lasche 80 ist eine Ausnehmung 82 eingebracht. Diese dient der Durchführung einer Anschlussleitung 100 für einen (nicht dargestellten) Temperaturfühler, der die von der Heizeinrichtung 20 erzeugte Temperatur erfasst und an die Stromversorgung oder eine externe Steuerung weiterleitet. In der Anschlussleitung 100 ist ein Stecker 110 ausgebildet, um den Temperaturfühler beim Ausbau der Düse 1 oder beim Auswechseln des Heizelements 20 von der Stromversorgung bzw. der Steuerung trennen zu können.

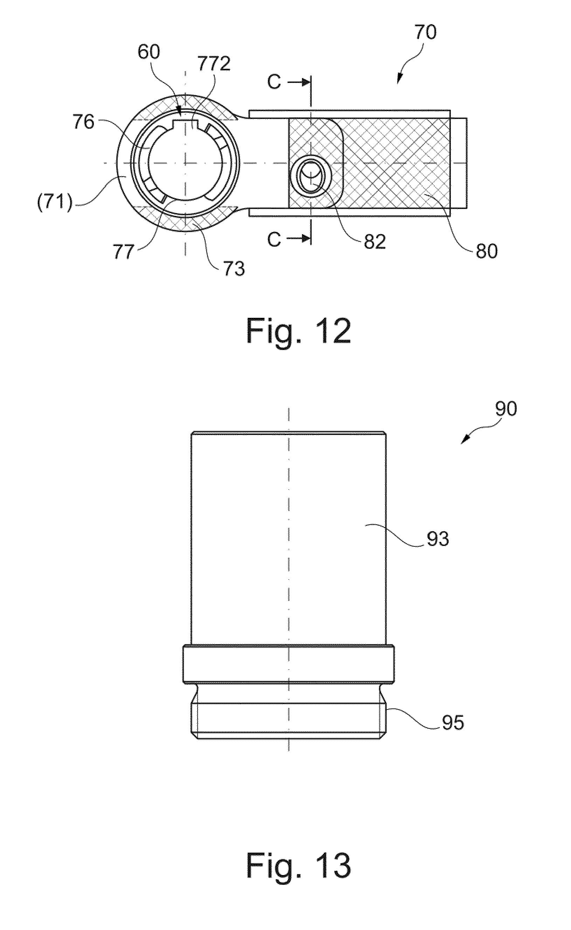

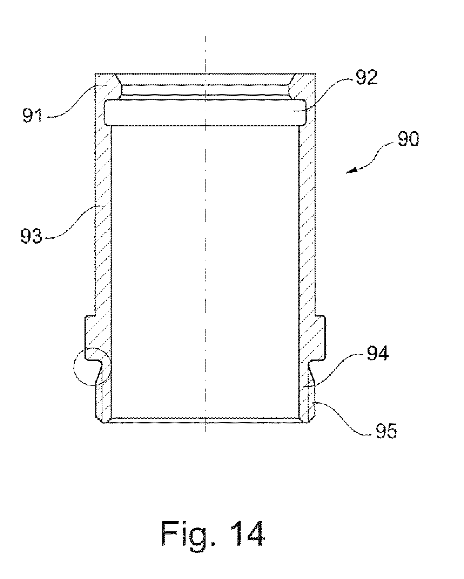

Die Fig. 13 und 14 zeigen die Außenhülse 90, mit der sowohl der Isolierkörper 50 als auch die Aufnahmehülse 70 an der Heißkanaldüse 1 fixiert werden. Die Außenhülse 90 hat einen Zylindermantel 93, dessen Innendurchmesser im Wesentlichen dem Außendurchmesser des Zylindermantels 71 der Aufnahmehülse 70 entspricht. Am oberen Ende 91 des Zylindermantels 93 ist innen eine Umfangsnut 92 ausgebildet. Diese dient zur Aufnahme des radial nach außen vorstehenden Flanschrandes 78 der Aufnahmehülse 70. An seinem unteren Ende 94 ist am Außenumfang des Zylindermantels 93 ein Gewinde 95 ausgebildet. Dieses greift in ein korrespondierendes Innengewinde 8 im Gehäuse 5 der Heißkanaldüse 1 ein, wobei das Innengewinde 8 in der Aussparung 7 des Gehäuses 5 ausgebildet ist.

Um einen stets zuverlässigen und lösbaren elektrischen Kontakt zwischen den Anschlusskontakten 22, 23 bzw. den Kontaktstiften 24, 25 des Heizelements 20 und den Kontaktelementen 32, 33 der Anschlussleitung 30 sowie zwischen dem weiteren Kontaktstift 26 und dem Masseanschluss in der Anschlussleitung 30 herzustellen, ist endseitig an der Anschlussleitung 30 ein dreipoliger Stecker 36 ausgebildet. Dieser hat an seinem Außenumfang radial nach außen vorstehende Rastelemente 38, die beim Einführen des Steckers 36 in die Aufnahmehülse 70 in deren Rastnut 72 eingreifen. Damit der Stecker 36 nicht falsch herum eingeführt werden kann, sind am Außenumfang zwei (nicht dargestellte) Vorsprünge ausgebildet, die wie ein Schlüssel in die Führungsnuten 74 der Aufnahmehülse 70 eingreifen. Der Stecker 36 kann damit nicht falsch herum in die Aufnahmehülse 70 eingesteckt werden.

Der Stecker 36 ist derart bemessen und ausgelegt, dass nach dem Verrasten der Rastelemente 38 hinter der Rastkante der Rastnut 72, die Kontaktelemente 32, 33 der Anschlussleitung 30 die Kontaktstifte 24, 25 des Heizelements 20 stets zuverlässig elektrisch kontaktieren.

Für die Montage der Anschlusseinrichtung 10 werden zunächst die Anschlusskontakte 22, 23 des Heizelements 20 endseitig mit Kontaktstiften 24, 25 versehen. Diese werden anschließend in den Isolierkörper 50 eingesetzt, wobei die Kontaktstifte 24, 25 in den Aufnahmekanälen 51 verrastet oder verklemmt werden. Der bereits in dem Isolierkörper 50 vormontierte Kontaktstift 26 für den Masseanschluss wird mit seiner (nicht gezeigten) Leitung an dem Trägerelement des Heizelements 20 angeschlossen, vorzugsweise durch verlöten oder mechanisch. Danach wird der Isolierkörper 50 mit seinem Sockelabschnitt 54 auf das Heizelement 20 aufgesetzt, wobei der Sockelabschnitt 54 die Anschlussflächen 21 und die Anschlusskontakte 22, 23 des Heizelements 20 abdeckt. Der Halsabschnitt 52 des Isolierkörpers 50 steht etwa rechtwinklig und radial von der Oberfläche des Heizelements 20 ab.

Nach dem Aufsetzen des Isolierkörpers 50 auf das Heizelement 20 wird das Materialrohr 2 in das Gehäuse 5 der Heißkanaldüse 1 eingesetzt, bis der Flansch 4 stirnseitig auf dem rückwärtigen Ende 6 des Gehäuses 5 aufsitzt. Dabei wird der radial nach außen abstehende Isolierkörper in die Aussparung 7 im Gehäuse 5 eingeführt.

Anschließend werden die Aufnahmehülse 70 und die Außenhülse 90 auf den Halsabschnitt 52 des Isolierkörpers 50 aufgesetzt, wobei die Hülsen 70, 90 zuvor ineinander gefügt worden sind, indem z.B. die Außenhülse 90 von oben auf die Aufnahmehülse 70 aufgesteckt wird. Dabei werden die Abschnitte 711 des Zylindermantels 71 von dem oberen Flanschrand 78 nach innen gedrückt. Sobald die Aufnahmehülse 70 in der Außenhülse 90 ihre Endposition erreicht hat, gelangt der Flanschrand 78 in die Rastnut 92 der Außenhülse 90 und die Abschnitte 711 können wieder nach außen federn. Man erkennt, dass die Aufnahmehülse 70 und die Außenhülse 90 konzentrisch zueinander angeordnet sind und dass die Aufnahmehülse 70 axialfest-drehbar in der Außenhülse 90 gelagert ist.

Sobald das Außengewinde 95 der Außenhülse 90 und das Innengewinde 8 in der Aussparung 7 des Gehäuses 5 greifen, kann die Außenhülse 90 durch einfaches Drehen mit dem Gehäuse 5 verschraubt werden. Die Aufnahmehülse 70 sitzt bereits über dem Halsabschnitt 52 des Isolierkörpers, wobei die Verdrehsicherung 60 dafür sorgt, dass sich die Aufnahmehülse 70 nicht mitdreht. Diese senkt sich vielmehr über dem Isolierkörper 50 ab, bis die Federelemente 76 auf dem Sockelabschnitt 54 aufliegen und die Lasche 80 die Aussparung 7 im Gehäuse 5 verschließt. Die Federelemente 76 drücken den Isolierkörper 50 mit leichter Kraft gegen das Heizelement 20.

Um das Heizelement 20 an die Stromversorgung anzuschließen muss nur noch der Stecker 36 in die Aufnahmehülse 70 eingesteckt werden. Dabei stellt zunächst der vorauseilende Kontaktstift 26 den Masseanschluss her. Sobald der Stecker 36 vollständig in die Aufnahmehülse 70 eingeführt ist, verrasten die Rastelemente 38 in der Rastnut 72, so dass sich die Steckverbindung nicht mehr lösen kann. Die Kontaktstifte 24, 25 kontaktieren die Kontaktelemente 32, 33 der Anschlussleitung 30. Sobald der Temperaturfühler angeschlossen ist, kann die Heißkanaldüse 1 betrieben werden.

Zum Lösen des elektrischen Kontakts, muss lediglich der Stecker 36 aus der Aufnahmehülse 70 herausgezogen werden. Hierbei werden die Rastelemente 38 eingefahren, indem entweder ein entsprechendes Stellglied betätigt wird oder der Stecker ist mit einer sogenannten Push-Pull-Technik ausgerüstet, wie sie beispielsweise von der Firma LEMO bekannt ist.

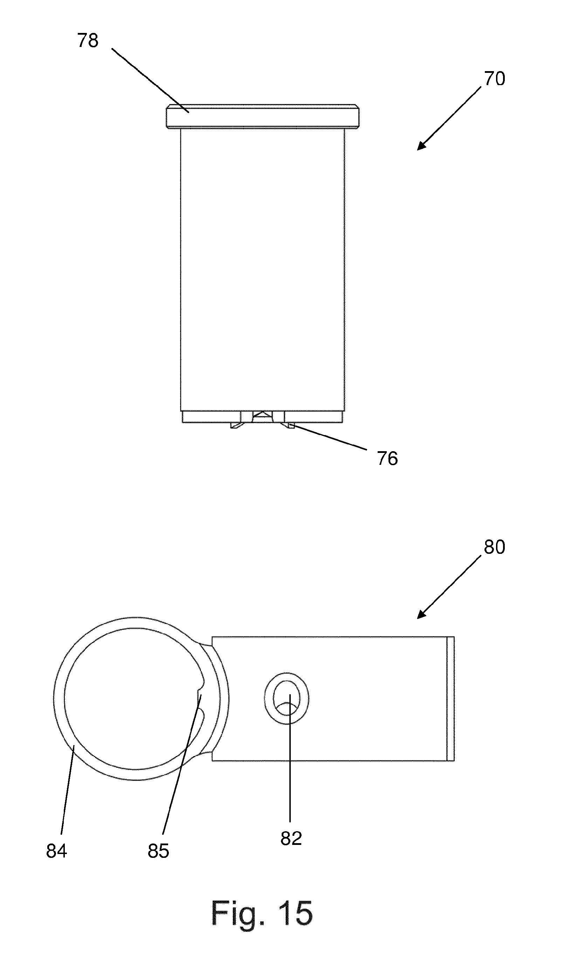

In einer anderen Ausführungsform der Erfindung sind die Aufnahmehülse 70 und die Lasche 80 getrennt ausgebildet (siehe Fig. 15). Die Lasche 80 trägt hierzu seitlich einen Ring 84, der von unten auf den unteren Rand 73 der Aufnahmehülse 70 aufgesetzt wird. Der Rand 73 ist hierzu bevorzugt stufenförmig ausgebildet und mit einer (nicht näher bezeichneten) Umfangsausnehmung versehen, in die eine in dem Ring 84 ausgebildete Nase 85 als Verdrehsicherung und Positionierungshilfe eingreift.

Die Erfindung ist nicht auf eine der vorbeschriebenen Ausführungsformen beschränkt, sondern in vielfältiger Weise abwandelbar. So kann der Isolierkörper 50 grundsätzlich auch eine andere Form aufweisen, beispielweise zylinderförmig mit einem nur schmal ausgebildeten radialen Flansch, als Ansatz für die Hülsen 70, 90. Wird für die elektrische Verbindung kein Masseanschluss verwendet oder benötigt, kann der Stecker 36 auch zweipolig ausgebildet sein.

Man erkennt, dass die Erfindung eine Anschlusseinrichtung 10 zum Erzeugen einer elektrischen Verbindung zwischen einem elektrischen Heizelement 20 einer Heißkanaldüse 1 und einer Anschlussleitung 30 betrifft, die mit einer Stromquelle verbunden ist, wobei die Anschlussleitung 30 Kontaktelemente 32, 33 aufweist, die mit Anschlusskontakten 22, 23 des Heizelements 20 elektrisch kontaktierbar sind. Die Anschlusskontakte 22, 23 des Heizelements 20 enden in einem Isolierkörper 50, der die Anschlusskontakte 22, 23 elektrisch voneinander trennt, wobei letztere endseitig mit Kontaktstiften 24, 25 versehen sind. Ein weiterer Kontaktstift 26 in dem Isolierkörper 50 dient als Masseanschluss. Zur Befestigung des Isolierkörpers 50 auf dem Heizelement 20 bzw. an der Heißkanaldüse 1 sind eine Aufnahmehülse 70 und eine dazu konzentrisch angeordnete Außenhülse 90 vorgesehen. Dabei ist der Isolierkörper 50 zumindest abschnittsweise in der Aufnahmehülse 70 angeordnet, während die Außenhülse 90 in der Art einer Überwurfmutter mit dem Gehäuse 5 der Heißkanaldüse 1 verschraubt wird. Die Außenhülse 90 ist dazu axialfest-drehbar auf der Aufnahmehülse 70 gelagert. Letztere bildet eine Buchse für einen Stecker 36, der endseitig an der Anschlussleitung 30 ausgebildet ist, und die Kontaktelemente 32, 33 und ggf. einen weiteren Kontakt für den weiteren Kontaktstift 26 integriert. Der Stecker 36 ist derart in oder an der Aufnahmehülse 70 festlegbar, dass die Kontaktelemente 32, 33 der Anschlussleitung 30 die Anschlusskontakte 22, 23 des Heizelements 20 und der Massekontakt den weiteren Kontaktstift 26 elektrisch kontaktieren.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

| | | | |
|---|---|---|---|
| A | Axialrichtung | 56 | Ausnehmung |
| L | Längsrichtung | 60 | Verdrehsicherung |
| | | 70 | Aufnahmehülse |
| 1 | Heißkanaldüse | 71 | Zylindermantel |
| 2 | Materialrohr | 711 | Abschnitt |
| 3 | Düsenmundstück | 72 | Rastnut |
| 4 | Flansch | 73 | unterer Rand |
| 5 | Gehäuse | 74 | Führungsnut |
| 6 | Ende | 75 | oberer Rand |
| 7 | Aussparung | 76 | Federelement |
| 8 | Innengewinde | 77 | Flanschrand |
| | | 772 | Aussparung |
| 10 | Anschlusseinrichtung | 78 | Flanschrand |
| 20 | Heizelement | 79 | Schlitz |
| 21 | Anschlussfläche | 80 | Lasche |
| 22 | Anschlusskontakt | 82 | Ausnehmung |
| 23 | Anschlusskontakt | 84 | Ring |
| 24 | Kontaktstift | 90 | Außenhülse |
| 25 | Kontaktstift | 91 | oberes Ende |
| 26 | weiterer Kontaktstift | 92 | Umfangsnut |
| 30 | Anschlussleitung | 93 | Zylindermantel |
| 32 | Kontaktelement | 94 | unteres Ende |
| 33 | Kontaktelement | 95 | Gewinde |
| 36 | Stecker | 100 | Anschlussleitung |
| 38 | Rastelement | | |
| 50 | Isolierkörper | | |
| 51 | Aufnahmekanal | | |
| 52 | Halsabschnitt | | |
| 522 | Vorsprung | | |
| 53 | Hohlraum | | |
| 54 | Sockelabschnitt | | |
| 55 | Aufnahmekanal | | |

## Patentansprüche

1. Anschlusseinrichtung (10) zum Erzeugen einer elektrischen Verbindung zwischen einem elektrischen Heizelement (20) einer Heißkanaldüse (1) und einer Anschlussleitung (30), die mit einer Stromquelle verbunden ist, wobei die Anschlussleitung (30) Kontaktelemente (32, 33) aufweist, die mit Anschlusskontakten (22, 23) des Heizelements (20) elektrisch kontaktierbar sind,
▪ wobei die Anschlusskontakte (22, 23) des Heizelements (20) in einem Isolierkörper (50) enden, der die Anschlusskontakte (22, 23) elektrisch voneinander trennt,
▪ wobei der Isolierkörper (50) zumindest abschnittsweise in einer Aufnahmehülse (70) angeordnet ist, und
▪ wobei die Anschlussleitung (30) derart in oder an der Aufnahmehülse (70) festlegbar ist, dass die Kontaktelemente (32, 33) der Anschlussleitung (30) die Anschlusskontakte (22, 23) des Heizelements (20) elektrisch kontaktieren,
**dadurch gekennzeichnet, dass** der Isolierkörper (50) einen Halsabschnitt (52) und einen Sockelabschnitt (54) aufweist, wobei der Sockelabschnitt (54) des Isolierkörpers (50) die Anschlusskontakte (22, 23) des Heizelements (20) überdeckt.

2. Anschlusseinrichtung nach Anspruch 1, **dadurch gekennzeichnet, dass** die Anschlusskontakte (22, 23) des Heizelements (20) endseitig mit Kontaktstiften (24, 25) versehen sind.

3. Anschlusseinrichtung nach Anspruch 1, **dadurch gekennzeichnet, dass** sich die Aufnahmehülse (70) auf dem Sockelabschnitt (54) des Isolierkörpers (50) abstützt.

4. Anschlusseinrichtung nach einem der Ansprüche 1 bis 3, **dadurch gekennzeichnet, dass** in dem Isolierkörper (50) ein weiterer Kontaktstift (26) vorgesehen ist.

5. Anschlusseinrichtung nach Anspruch 4, **dadurch gekennzeichnet, dass** der weitere Kontaktstift (26) länger ausgebildet ist als die Kontaktstifte (24, 25).

6. Anschlusseinrichtung nach Anspruch 4 oder 5, **dadurch gekennzeichnet, dass** der weitere Kontaktstift (26) einen Masseanschluss für das Heizelement (20) bildet.

7. Anschlusseinrichtung nach einem der Ansprüche 1 bis 6, **dadurch gekennzeichnet, dass** zwischen dem Isolierköper (50) und der Aufnahmehülse (70) eine Verdrehsicherung (60) ausgebildet ist.

8. Anschlusseinrichtung einem der Ansprüche 1 bis 7, **dadurch gekennzeichnet, dass** die Anschlussleitung (30) endseitig einen Stecker (36) aufweist, der lösbar in der Aufnahmehülse (70) festlegbar ist.

9. Anschlusseinrichtung nach einem der Ansprüche 1 bis 8, **dadurch gekennzeichnet, dass** zwischen der Aufnahmehülse (70) und dem Isolierkörper (50) ein Federelement (76) angeordnet ist.

10. Anschlusseinrichtung nach einem der Ansprüche 1 bis 9, **dadurch gekennzeichnet, dass** die Aufnahmehülse (70) an ihrem unteren Ende eine Lasche (80) trägt.

11. Anschlusseinrichtung nach Anspruch 10, **dadurch gekennzeichnet, dass** die Lasche (80) mit einer Ausnehmung (82) zur Durchführung einer Anschlussleitung (100) für einen Temperaturfühler versehen ist.

12. Anschlusseinrichtung nach einem der Ansprüche 1 bis 11, **dadurch gekennzeichnet, dass** die Aufnahmehülse (70) konzentrisch in einer Außenhülse (90) angeordnet ist.

13. Anschlusseinrichtung nach Anspruch 12, **dadurch gekennzeichnet, dass** die Aufnahmehülse (70) axialfest-drehbar in der Außenhülse (90) gelagert ist.

14. Anschlusseinrichtung nach Anspruch 12 oder 13, **dadurch gekennzeichnet, dass** die Außenhülse (90) mit ihrem unteren Ende (94) an einem Gehäuse (5) der Heißkanaldüse (1) festlegbar ist.

15. Heißkanaldüse (1) für ein Spritzgießwerkzeug, mit einer Anschlusseinrichtung (10) nach einem der Ansprüche 1 bis 14.

## Claims

1. Connector device (10) for creating an electrical connection between an electrical heating element (20) of a hot runner nozzle (1) and a connection line (30), which is connected to a source of electricity, the connection line (30) having contact elements (32, 33) which can be electrically contacted with connector contacts (22, 23) of the heating element (20),
- the connector contacts (22, 23) of the heating element (20) ending in an insulating body (50) which electrically separates the connector contacts (22, 23) from one another,
- the insulating body (50) being arranged at least in portions in a receiving sleeve (70), and
- it being possible for the connection line (30) to be fixed either in or on the receiving sleeve (70) such that the contact elements (32, 33) of the connection line (30) electrically contact the connector contacts (22, 23) of the heating element (20),
**characterised in that** the insulating body (50) has both a neck portion (52) and a base portion (54), the base portion (54) of the insulating body (50) covering the connector contacts (22, 23) of the heating element (20).

2. Connector device according to claim 1, **characterised in that** the ends of the connector contacts (22, 23) of the heating element (20) are provided with contact pins (24, 25).

3. Connector device according to claim 1, **characterised in that** the receiving sleeve (70) is supported on the base portion (54) of the insulating body (50).

4. Connector device according to any of claims 1 to 3, **characterised in that** an additional contact pin (26) is provided in the insulating body (50).

5. Connector device according to claim 4, **characterised in that** the additional contact pin (26) is designed to be longer than the contact pins (24, 25).

6. Connector device according to either claim 4 or claim 5, **characterised in that** the additional contact pin (26) creates an earth connection for the heating element (20).

7. Connector device according to any of claims 1 to 6, **characterised in that** an anti-rotation device (60) is formed between the insulating body (50) and the receiving sleeve (70).

8. Connector device according to any of claims 1 to 7, **characterised in that** the end of the connection line (30) is provided with a plug (36) which can be releasably fixed in the receiving sleeve (70).

9. Connector device according to any of claims 1 to 8, **characterised in that** a spring element (76) is arranged between the receiving sleeve (70) and the insulating body (50).

10. Connector device according to any of claims 1 to 9, **characterised in that** the receiving sleeve (70) carries a tab (80) at the lower end thereof.

11. Connector device according to claim 10, **characterised in that** the tab (80) is provided with a recess (82) for passing through a connection line (100) of a temperature sensor.

12. Connector device according to any of claims 1 to 11, **characterised in that** the receiving sleeve (70) is concentrically arranged in an outer sleeve (90).

13. Connector device according to claim 12, **characterised in that** the receiving sleeve (70) is mounted in the outer sleeve (90) in a rotatable and axially fixed manner.

14. Connector device according to either claim 12 or claim 13, **characterised in that** the outer sleeve (90) is fixed by the lower end (94) thereof to a housing (5) of the hot runner nozzle (1).

15. Hot runner nozzle (1) for an injection mould, comprising a connector device (10) according to any of claims 1 to 14.

## Revendications

1. Dispositif de raccordement (10) pour créer une liaison électrique entre un élément chauffant électrique (20) d'une buse de canal chaud (1) et une ligne de raccordement (30) qui est reliée à une source de courant, la ligne de raccordement (30) comportant des éléments de contact (32, 33) qui peuvent être mis en contact électrique avec des contacts de raccordement (22, 23) de l'élément chauffant (20),
- les contacts de raccordement (22, 23) de l'élément chauffant (20) se terminant dans un corps isolant (50) qui sépare électriquement les contacts de raccordement (22, 23) les uns des autres,
- le corps isolant (50) étant agencé au moins en partie dans un manchon de logement (70), et
- la ligne de raccordement (30) pouvant être fixée de telle sorte dans ou sur le manchon de logement (70) que les éléments de contact (32, 33) de la ligne de raccordement (30) sont en contact électrique avec les contacts de raccordement (22, 23) de l'élément chauffant (20),
**caractérisé en ce que** le corps isolant (50) comporte une partie formant col (52) et une partie formant socle (54), la partie formant socle (54) du corps isolant (50) recouvrant les contacts de raccordement (22, 23) de l'élément chauffant (20).

2. Dispositif de raccordement selon la revendication 1, **caractérisé en ce que** les contacts de raccordement (22, 23) de l'élément chauffant (20) sont munis de broches de contact (24, 25) à leurs extrémités.

3. Dispositif de raccordement selon la revendication 1, **caractérisé en ce que** le manchon de logement (70) s'appuie sur la partie formant socle (54) du corps isolant (50).

4. Dispositif de raccordement selon l'une des revendications 1 à 3, **caractérisé en ce qu'**une autre broche de contact (26) est prévue dans le corps isolant (50).

5. Dispositif de raccordement selon la revendication 4, **caractérisé en ce que** l'autre broche de contact (26) est conçue plus longue que les broches de contact (24, 25).

6. Dispositif de raccordement selon la revendication 4 ou 5, **caractérisé en ce que** l'autre broche de contact (26) forme une borne de masse pour l'élément chauffant (20).

7. Dispositif de raccordement selon l'une des revendications 1 à 6, **caractérisé en ce qu'**une sécurité anti-torsion (60) est conçue entre le corps isolant (50) et le manchon de logement (70).

8. Dispositif de raccordement selon l'une des revendications 1 à 7, **caractérisé en ce que** la ligne de raccordement (30) comporte à son extrémité un connecteur (36) qui peut être fixé, amovible, dans le manchon de logement (70).

9. Dispositif de raccordement selon l'une des revendications 1 à 8, **caractérisé en ce qu'**un élément formant ressort (76) est agencé entre le manchon de logement (70) et le corps isolant (50).

10. Dispositif de raccordement selon l'une des revendications 1 à 9, **caractérisé en ce que** le manchon de logement (70) porte une languette (80) à son extrémité inférieure.

11. Dispositif de raccordement selon la revendication 10, **caractérisé en ce que** la languette (80) est munie d'un évidement (82) pour le passage d'une ligne de raccordement (100) destinée à un capteur de température.

12. Dispositif de raccordement selon l'une des revendications 1 à 11, **caractérisé en ce que** le manchon de logement (70) est agencé concentrique dans un manchon extérieur (90).

13. Dispositif de raccordement selon la revendication 12, **caractérisé en ce que** le manchon de logement (70) est logé, de manière à pouvoir tourner autour d'un axe fixe, dans le manchon extérieur (90).

14. Dispositif de raccordement selon la revendication 12 ou 13, **caractérisé en ce que** le manchon extérieur (90) peut être fixé avec son extrémité inférieure (94) à un boîtier (5) de la buse de canal chaud (1).

15. Buse de canal chaud (1) destinée à un outil de moulage par injection, avec un dispositif de raccordement (10) selon l'une des revendications 1 à 14.
